# EUROPEAN PATENT APPLICATION

(11) **EP 4 410 742 A1**
(43) Date of publication of application: **07.08.2024**
(21) Application number: 23784312.3
(22) Date of filing: 06.04.2023
(51) Int. Cl.: C01B 25/37

(54) **METHOD FOR PREPARING IRON PHOSPHATE DIHYDRATE BY DECOMPLEXING IRON PHOSPHATE COMPLEX**

(30) Priority: 08.04.2022 CN 202210366746
(71) Applicant: Huanggang Linli New Energy Technology Co., Ltd, Huanggang, Hubei 438000 (CN)
(72) Inventor: MA, Xiaoling, Huanggang, Hubei 438000 (CN)
(74) Representative: Huang, Liwei
(86) International application number: PCT/CN2023/086517
(87) International publication number: WO 2023/193749

(57) **Abstract**

Disclosed is a method for preparing iron phosphate dihydrate by decomplexing an iron phosphate complex. The method comprises: in an iron phosphate complex solution, adding water of 0.3-30 times, preferably 0.3-8 times the volume of the complex solution; reacting for 1 min to 20 h, preferably 10 min to 6 h; and separating the solid and liquid phases to give solid iron phosphate dihydrate. The method provided by the present invention can be used for simple, efficient, and environment-friendly preparation of iron phosphate of high purity as a positive electrode material for lithium batteries.

## Description

The present application claims the priority to Patent Application No. 202210366746.9, filed on Apr. 8, 2022, to the China National Intellectual Property Administration and entitled "METHOD FOR PREPARING IRON PHOSPHATE DIHYDRATE BY DECOMPLEXING IRON PHOSPHATE COMPLEX", which is incorporated herein by reference in its entirety.

### TECHNICAL FIELD

The present invention relates to the technical field of novel inorganic materials, and in particular, to a method for preparing ferric phosphate for lithium-ion battery positive electrode materials.

### BACKGROUND

As a positive electrode material of lithium-ion batteries, lithium iron phosphate has a high specific capacity, good safety, long cycle life, good thermal stability, a variety of sources, and cost-efficiency, and is a positive electrode material coexisting with ternary materials for prolonged periods. At present, the industrial production of most lithium iron phosphate produced uses precursor synthesis, where ferric phosphate (FePO₄) as the iron source and phosphorus source is firstly prepared and mixed with a lithium source and a carbon source, and the mixture is sintered at high temperature in an inert atmosphere to give carbon-coated lithium iron phosphate. Ferric phosphate is a precursor for preparing lithium iron phosphate, and the quality of the ferric phosphate precursor has a great influence on the performance of the lithium iron phosphate product.

At present, the synthesis of ferric phosphate mainly includes the following: (1) Synthesis with a ferric salt and a phosphate as the iron source and the phosphorus source, respectively. In this synthesis method, anion and cation impurities are introduced by the iron source and the phosphorus source, such that a large amount of deionized water is required for washing the acquired ferric phosphate precipitate, and the wastewater generated by the washing may need further treatment to prevent environment contamination. As such, the method is cost-inefficient, and enterprises using the preparation method may encounter challenges in such a circumstance that the price of lithium iron phosphate is greatly reduced at present; (2) Synthesis of ferric phosphate by producing ferrous phosphate from an elemental iron powder and phosphoric acid as the iron source and the phosphorus source respectively and oxidizing same, as described in CN111377426A or CN201510209131.5. In this synthesis method, no impurities are introduced by the iron source and the phosphorus source, and thus the washing of the precipitate and the subsequent treatment of wastewater are relatively simple. However, the reaction of iron powder and phosphoric acid produces a large amount of heat and flammable hydrogen, and the addition of the oxidation procedure increases the complexity and difficulties of the process. In industrial mass production of ferric phosphate, the method features a high cost in safety. (3) Synthesis of ferric phosphate by the reaction of ferric oxide and phosphoric acid. The method eliminates the defects in the previous two processes, and is described in a great number of patent applications in the prior art. However, existing process routes of method (3) in the prior art usually require excessive phosphoric acid to ensure a complete reaction of ferric oxide and phosphoric acid, and excessive phosphoric acid may form a complex with ferric phosphate that is stable in the solution and difficult to separate by precipitation (paragraph 0007 in Patent No. CN101821197B describes the presence of the soluble ferric complex, and considers the method uneconomical and impractical). Patent Application No. CN112225190A reduces the phosphoric acid content by adding urea, thus disrupting the ferric phosphate-phosphoric acid complex to improve the yield of ferric phosphate. However, the method introduces impurities and produces by-products (ammonium phosphate), thus producing wastewater and wastegases. Patent No. CN103663401B uses a diluted but excessive phosphoric acid solution to react with ferric oxide or ferric hydroxide (the concentration of phosphoric acid is 10%, and the molar ratio of phosphoric acid to iron is greater than 10:1 or even 20:1), which, however, possesses the problem of low efficiency and cost-efficiency. Patent No. CN101821197B uses phosphoric acid at a concentration of 8-23% (about 21% in Example 1) to react with ferric oxide or ferric hydroxide to give ferric phosphate. Paragraph 14 mentions that the use of phosphoric acid at a high concentration will leave ferric orthophosphate in the solution, and the crystallization cannot be completed in an acceptable time, quality, and/or form. Similarly, this reaction also has a drawback in efficiency due to the use of phosphoric acid at a medium or low concentration. A more serious drawback is that during the reaction, "part of the starting materials and products are always present in parallel in the solid form during the reaction. As a result, separation of impurities, either as a solution or as a solids, is impossible. Therefore, in order to achieve a high level of chemical purity in the product, the quality and purity of the starting materials are important and must be determined in advance" (see the description in Paragraph 10 of Patent No. CN102333725B for the method in German family member of CN101821197B). This indicates that the applicant CHEM FAB BUDENHEIM KG has no confidence at all in the industrial application of the process, especially in mass production.

In fact, there is a need in the art for a method of decomplexing the ferric phosphate complex (ferric phosphate-phosphoric acid complex) to produce ferric phosphate more efficiently and cost-efficiently.

Patent Application No. CN106829906A discloses a method for decomplexing ferric phosphate-phosphoric acid complex, in which a ferric phosphate complex solution is placed in an autoclave with the pressure controlled at 0.1-0.5 Mpa and the temperature at 100-180 °C, so as to give the corresponding ferric phosphate crystal. However, examples of the patent application did not provide the specific amount required for those skilled in the art to repeat the experiment, and the inventors of the present invention repeated the experiment and did not acquire ideal experimental results (see comparative examples of the present application). Even if the method disclosed in the patent application is considered feasible, the reaction is conducted at a pressure of 0.1 to 0.5 MPa (0.15 to 0.25 MPa in Examples 1 to 4) and a decomplexing temperature over 100 °C (120 to 140 °C in the examples), thus posing problems of strict operating conditions and high energy consumption in industrial circumstances.

There is still a need in the art for a method that provides higher yields, lower energy consumption and costs, and higher production efficiency, particularly a method that reduces the hindrance of decomplexing the ferric phosphate complex.

### SUMMARY

The present invention provides a method for preparing ferric phosphate dihydrate by decomplexing a ferric phosphate complex, which features the advantages of ease to operate, energy-efficiency, environment conservation, and efficiency. Furthermore, the present invention discloses a method for preparing ferric phosphate, particularly, a method for preparing high-purity ferric phosphate.

The present invention discloses a method for preparing ferric phosphate dihydrate by decomplexing a ferric phosphate complex solution, comprising: adding, to a ferric phosphate complex solution, water of 0.3-30 times, preferably 0.3-8 times the volume of the complex solution, reacting for 1 min-20 h, preferably 10 min-6 h, and conducting solid-liquid separation to give solid ferric phosphate dihydrate.

In fact, when a certain amount of water is added, precipitate may be observed. As such, the reaction time may be as less as 1 min, even a few seconds, and may be prolonged, even greater than 20 h, to give a product with better crystal form.

The method is conducted at temperature within a range from room temperature to 180 °C, preferably at 60 °C to 160 °C. The inventors found that an increased temperature is helpful for the decomplexation reaction and that theoretically a reaction temperature below the boiling point of the complex solution would be possible to implement the method. However, an excessive temperature will result in high energy consumption and safety risks. In addition, when the phosphorus-to-iron ratio of the ferric phosphate complex solution is (2.5-10):1, for example (2.5-8):1, a smaller amount of water added will initiate the decomplexation reaction.

Furthermore, the method is conducted at normal pressure, or in a pressurized condition. Pressurization may accelerate the decomplexation reaction, and the pressure range of the pressurization is 0.1 MPa to 1 MPa (absolute pressure), preferably 0.1 MPa to 0.5 MPa. The pressurization according to the present invention comprises 1 Pa above atmospheric pressure, i.e., a slight pressurization.

When implementing the method of the present invention, the addition of water to the complex solution can lead to decomplexing, resulting in the precipitation of ferric phosphate dihydrate. This may occur even at room temperature, as can be seen in the results of Examples of the present invention. However, the addition of excessive water will lead to a great amount of subsequent wastewater (phosphoric acid-containing wastewater), and will also greatly increase the material treatment amount, resulting in a reduction in production efficiency. Therefore, the amount of water added is preferably 0.3-8 times the amount of the complex solution.

The water is common industrial water and is selected according to the purity requirement of the final product. To avoid the introduction of impurities, purified water or deionized water is preferred.

The inventors found that the precipitation speed of the ferric phosphate dihydrate can be accelerated by heating, pressurizing, and the like after the water is added to the complex solution. The addition amount of water, the heating temperature, and the pressure are associated. To achieve similar decomplexing effects, in the case of heating and/or pressurization, the addition amount of water can be reduced, thus reducing the energy consumption (by only heating and/or pressurizing).

In addition, a variety of considerations are present for the addition amount of water. In industrial production, the cost-efficiency and subsequent treatment procedures, particularly the treatment of wastewater, should be strictly considered. Therefore, the water addition amount that causes complete precipitation of ferric phosphate dihydrate is not required, since the mother liquor obtained after the ferric phosphate dihydrate is obtained through the solid-liquid separation can be returned to previous procedures for recycling as a starting material, although the mother liquor also contains the ferric phosphate complex. As such, the energy consumption can be reduced, and no wastewater is produced.

The heating reaction of the present invention can be conducted for 1 min to 20 h, which also demonstrates that the precipitation speed of ferric phosphate dihydrate may be either fast or slow. A short reaction time may indicate a high precipitation speed and an amorphous ferric phosphate dihydrate precipitate; while in a prolonged reaction period, the precipitation speed can be reduced by controlling the temperature and the water addition amount, so as to acquire ferric phosphate dihydrate with a certain crystal form. The ferric phosphate dihydrate precipitate may be white, or possibly pink.

The ferric phosphate complex solution can be obtained by methods commonly used in the art, such as a method of reacting Fe with phosphoric acid, or a method of reacting ferrous iron, such as ferrous oxide and ferrous hydroxide, with phosphoric acid and then oxidizing, or a method of reacting ferric iron, such as ferric oxide and ferric hydroxide, with phosphoric acid, or a method of reacting ferroferric oxide with phosphoric acid (an oxidization procedure is required to convert ferrous ions into ferric ions), or a method of converting a ferric-containing salt or a complex salt to give a solution of ferric phosphate.

The present invention also discloses a method for preparing ferric phosphate dihydrate by decomplexing a ferric phosphate complex, comprising:
S1: controlling the phosphorus-to-iron ratio in the ferric phosphate complex solution at (2.5-10):1, preferably (3-6):1;
S2: adding water to dilute the ferric phosphate complex solution, controlling the content of Fe ion within the range of 0.1-2 mol/L, controlling the temperature of the complex solution to be within a range from room temperature to 180 °C, and reacting for 1 min to 20 h to give ferric phosphate dihydrate precipitate.

Wherein,
S1 can be conducted by controlling the molar ratio of ferric oxide to phosphoric acid in the reaction of starting materials, for example, increasing the number of moles of ferric oxide, decreasing the phosphorus-to-iron ratio, or increasing the phosphoric acid to increase the phosphorus-to-iron ratio in the ferric phosphate complex solution.

In S2, the content of Fe ions is preferably between 0.2-2 mol/L, the heating temperature is preferably 60 °C to 160 °C, and the reaction time is preferably 10 min to 6 h; if desired, solid-liquid separation may be conducted to give a ferric phosphate dihydrate solid product; preferably, S2 is conducted in a pressurized condition, the pressure being controlled at 0.1-1 MPa (absolute pressure), preferably 0.1-0.5 MPa (absolute pressure).

Furthermore, the method may further comprise:
S3, optionally, returning a second mother liquor obtained by the solid-liquid separation to S1 for controlling the phosphorus-to-iron ratio.

The present invention further discloses a method of preparing ferric phosphate, comprising:
S0: reacting a 35-85% phosphoric acid with ferric oxide in a phosphorus-to-iron ratio of (2-10):1 at temperature within a range from room temperature to 180 °C, filtering to remove insoluble substances after the reaction, and collecting a first mother liquor;
S1: detecting and adjusting the phosphorus-to-iron ratio in the first mother liquor ferric phosphate complex solution to (2.5-10):1; and
S2: controlling the temperature of the first mother liquor to be within a range from room temperature to 180 °C, adding water into the first mother liquor, controlling the concentration of Fe ion at 0.1 mol/L and 2 mol/L, reacting for 10 min to 8 h, and conducting solid-liquid separation to give a solid ferric phosphate dihydrate and a second mother liquor.

Preferably, S0 is conducted at 60 °C to 140 °C, and the concentration of phosphoric acid is 50-85%;
preferably, S2 is conducted at 60 °C to 160 °C; optionally, S2 can be conducted in a pressurized condition, the pressure being controlled at 0.1-1 MPa (absolute pressure), preferably 0.1-0.5 MPa (absolute pressure).

Furthermore, the method may further comprise:
S3: returning the second mother liquor obtained by the solid-liquid separation to S0, mixing with concentrated phosphoric acid to adjust the concentration of phosphoric acid, or returning to S1 for adjusting the phosphorus-to-iron ratio;
and/or, if desired, S4: roasting ferric phosphate dihydrate to give ferric phosphate.

### Terminology and Definitions:

Ferric phosphate complex: a ferric phosphate-phosphoric acid complex formed by ferric phosphate and phosphoric acid, present in the form of a solution.

Ferric phosphate dihydrate: also known as ferric phosphate dihydrate, ferric phosphate containing two crystal water molecules, which, when precipitated from solution, usually contains two crystal water molecules.

Phosphorus-to-iron ratio: in the present invention, the phosphorus-to-iron ratio (P:Fe) refers to the molar ratio of phosphorus element to iron element in the ferric phosphate complex solution. Phosphorus refers to all forms of phosphorus in the solution, including ferric phosphate complex and the total phosphorus in the excess phosphoric acid in the solution, and iron is all forms of iron element in the solution. For example, in the solution or product obtained by reacting 3 mol of phosphoric acid with 1 mol of ferric hydroxide, the phosphorus-to-iron ratio is 3:1, and the phosphorus-to-iron ratio of 6 mol of phosphoric acid to 1 mol of ferroferric oxide is 2:1. In the present invention, the phosphorus-to-iron ratio is described as 3:1 or 3, which carry the same meaning and denote phosphorus:iron = 3:1.

Room temperature: it refers to the ambient temperature, which, in the context of the present invention, is 15-25 °C, without heating.

Gauge pressure: the total absolute pressure exceeding the ambient atmospheric pressure or the fraction of the pressure in the liquid above the atmospheric pressure at a certain point. The gauge pressure in the present invention refers to a pressure fraction above the atmospheric pressure, and when converted into the absolute pressure, is added to the atmospheric pressure value. In the present invention, the pressure denotes the absolute pressure, unless otherwise specified.

Fe ion: iron(III) ion, also known as Fe³⁺.

min: minute(s).

H (or h): hour(s).

### Beneficial Effects

The method disclosed herein has the following beneficial effects:
1. A simple and efficient method for decomplexing a ferric phosphate complex is provided, which greatly improves the efficiency of preparing ferric phosphate and the cost-efficiency.
2. Compared with the pressurized reaction in the prior art, the method features the advantages of energy-efficiency, ease of operation, and safety.

### BRIEF DESCRIPTION OF THE DRAWINGS

FIG. 1 is an X-ray diffraction (XRD) pattern of ferric phosphate dihydrate prepared in Example 8.
FIG. 2 is a scanning electron micrograph of anhydrous ferric phosphate prepared in Example 8.

### DETAILED DESCRIPTION

The embodiments of the present invention will be further illustrated in detail with reference to the following specific examples. It should be understood that the following examples are merely exemplary illustrations and explanations of the present invention, and should not be construed as limiting the protection scope of the present invention. All techniques implemented based on the content of the present invention described above are included within the protection scope of the present invention.

Unless otherwise stated, the starting materials and reagents used in the following examples are all commercially available products, or can be prepared by using known methods.

### Preparative Example 1. Preparation of ferric phosphate complex solution

In this example, ferric phosphate complex solutions with different phosphorus-to-iron ratios were prepared by reacting ferric oxide with phosphoric acid. Ferric phosphate complex solutions with different phosphorus-to-iron ratios can be acquired by adjusting the feeding amounts of the starting materials and the molar ratios of the starting materials. Finally, complex solutions with different phosphorus-to-iron ratios were obtained.
CX1: a complex solution with a phosphorus-to-iron ratio of 3.75:1 and an Fe concentration of 2 mol/L;
CX2: a complex solution with a phosphorus-to-iron ratio of 4.5:1 and an Fe concentration of 2 mol/L;
CX3: a complex solution with a phosphorus-to-iron ratio of 6:1 and an Fe concentration of 2 mol/L;
CX4: a complex solution with a phosphorus-to-iron ratio of 8:1 and an Fe concentration of 1.788 mol/L.

The specific procedures are as follows with solution CX2 as an example: 310 mL of a phosphoric acid solution with a mass fraction of 85% was transferred into a 1-L flask, and 190 mL of deionized water was added to give a phosphoric acid solution at 9 mol/L. 79.84 g of ferric oxide powder (0.5 mol) was added to the phosphoric acid solution, and the system was heated to 90 °C and stirred at 90 °C for 3 h. After the completion of the reaction, the system was filtered to give a mauve ferric phosphate complex solution, wherein the phosphorus-to-iron ratio of the ferric phosphate complex solution was 4.5:1, and the ferric concentration was 2 mol/L.

### Example 1. Decomplexation test

Deionized water was slowly added to 50 mL of ferric phosphate complex solutions (CX1-CX3) with different phosphorus-to-iron ratios. When precipitation was observed, the V_{water}:Vₛₒₗᵤₜᵢₒₙ ratio was recorded. The test results are shown in EX11-17.

The test results demonstrate that: 1, at room temperature, the addition of water may also lead to the precipitation of ferric phosphate dihydrate, i.e., the decomplexing of the ferric phosphate complex, regardless of the heating condition; 2, after water is added, the complex can be decomplexed by heating, thus reducing the water addition amount; 3, ferric phosphate complex solutions with a lower phosphorus-to-iron ratio requires a less water addition amount.

**Table 1. Test results of Example 1**

| | Phosphorus-to-iron ratio | Molar concentration of Fe mol/L | Test temperature | Water addition ratio upon precipitation (V water: V solution) |
|---|---|---|---|---|
| EX11 | 3.75: 1 | 2 | Room temperature | 16:1 |
| EX12 | 3.75: 1 | 2 | 60 °C | 11:1 |
| EX13 | 3.75: 1 | 2 | 100 °C | 7:1 |
| EX14 | 4.5:1 | 2 | Room temperature | 21:1 |
| EX15 | 4.5:1 | 2 | 60 °C | 16:1 |
| EX16 | 4.5:1 | 2 | 100 °C | 10:1 |
| EX17 | 6:1 | 2 | Room temperature | 28:1 |

The test results of Example 1 show that the addition of water effectively decomplexes the complex, resulting in the rapid formation of ferric phosphate dihydrate precipitate. However, at room temperature, a greater amount of water is required to precipitate ferric phosphate dihydrate. The addition amount of water can be reduced by raising the temperature. By adding a great amount of water, the complex is rapidly decomplexed, such that ferric phosphate dihydrate is rapidly precipitated, and the obtained ferric phosphate dihydrate is in an amorphous form or crystal form with an extremely low granularity.

### Example 2. Decomplexing test of solution CX1

A certain volume (generally 50 mL) of CX1 ferric phosphate complex solution with a phosphorus-to-iron ratio of 3.75:1 was taken. With the addition of different amounts (X times the volume of the complex solution) of water, the system temperature was controlled at Y °C and the reaction was conducted for 6 h until the amount of precipitate no longer increased. Through the experiment, the optimal water addition amount and decomplexing temperature were found at a phosphorus-to-iron ratio of 3.75:1.

The reaction yield was calculated by: taking a 1:1 volume ratio of the added deionized water to the complexing solution as an example, when the volume of the ferric phosphate complex solution was 50 mL, the volume of deionized water was 50 mL; the mixed solution of the ferric phosphate complex and deionized water was heated to 90 °C and incubated for 6 h; the mass of the acquired ferric phosphate dihydrate was 14.8358 g; the amount of ferric ion in the 50 mL of ferric phosphate complex solution was 0.1 mol; theoretically, the mass of the synthesized ferric phosphate dihydrate was 0.1 mol × 187 g/mol = 18.7 g, and the yield was 14.8358 g/18.7 g × 100% = 79.3%. It should be noted that the yield here is a one-step yield and is distinct from the final yield after a number of recyclings. By using the method of the present invention, the yield of ferric phosphate is generally 100% due to the recycling of the materials.

The results are as follows:

**Table 2. Test results of Example 2**

| Example | Actual phosphorus-t o-iron ratio | Ratio to water added, X (Vₛₒₗᵤₜᵢₒₙ:V_{water}) | Concentration of Fe after dilution mol/L | Reaction temperature Y (°C) | Reaction time (h) | Yield |
|---|---|---|---|---|---|---|
| EX21 | 3.75:1 | 1:0 | 2 | 90 | 6 | 0% |
| EX22 | 3.75:1 | 1:0.5 | 1.33 | 90 | 6 | 32.50% |
| EX23 | 3.75:1 | 1:1 | 1 | 90 | 6 | 79.3% |
| EX24 | 3.75:1 | 1:2 | 0.66 | 90 | 6 | 92.2% |
| EX25 | 3.75:1 | 1:3 | 0.5 | 90 | 6 | 95.5% |
| EX26 | 3.75:1 | 1:4 | 0.4 | 90 | 6 | 98.2% |

The results in Table 2 show that: in a phosphorus-to-iron ratio of about 3.75:1, the complex solution was heated with no water added, and after 6 h, no ferric phosphate dihydrate precipitate was observed. Surprisingly, after water was added, or specifically, deionized water of 0.5 times the volume of the solution was added to bring the concentration of Fe³⁺ to 1.33 mol/L, a decomplexation reaction occurred, resulting in the precipitation of ferric phosphate dihydrate. When the addition amount of deionized water was 1 to 4 times (relative to the volume of the complex solution), most of ferric phosphate dihydrate in the solution precipitated.

For industrial applications, complete precipitation of ferric phosphate dihydrate in one process may require more water and a higher temperature, and is thus of no practical prospects. Since the mother liquor after removing the ferric phosphate dihydrate by filtering was returned to the step of reacting ferric oxide with phosphoric acid, the concentration of phosphoric acid was adjusted, thus ensuring complete utilization of ferric phosphate and phosphoric acid.

### Example 3. Decomplexing test of solution CX2

The procedures are similar to those of Example 2, except that the starting material solution CX2 was used (the phosphorus-to-iron ratio was 4.5:1).

**Table 3. Test results of Example 3**

| Example | Actual phosphorus-to-iron ratio | Ratio to water added, X (Vₛₒₗᵤₜᵢₒₙ:V_{water}) | Concentration of Fe after dilution mol/L | Reaction temperature Y (°C) | Reaction time (h) | Yield |
|---|---|---|---|---|---|---|
| EX31 | 4.50:1 | 1:0 | 2 | 90 | 6 | 0% |
| EX32 | 4.50:1 | 1:0 | 2 | 120 | 6 | 0% |
| EX33 | 4.50:1 | 1:0.5 | 1.33 | 90 | 6 | 15.60% |
| EX34 | 4.50:1 | 1:1 | 1 | 90 | 6 | 71.20% |
| EX35 | 4.50:1 | 1:2 | 0.66 | 90 | 6 | 90.90% |
| EX36 | 4.50:1 | 1:3 | 0.5 | 90 | 6 | 93.84% |
| EX37 | 4.50:1 | 1:4 | 0.4 | 90 | 6 | 96.32% |
| EX38 | 4.50:1 | 1:5 | 0.33 | 90 | 6 | 99.03% |

The results in Table 3 show that: in a phosphorus-to-iron ratio of 4.5:1, even if the complex solution was heated to 120 °C, no ferric phosphate dihydrate precipitate was observed after 6 h with no water added. The addition of water (1-5 times in volume) caused the precipitation of ferric phosphate dihydrate. Particularly, when the concentration of Fe³⁺ reached 0.33 mol/L, more than 99% of ferric phosphate was precipitated and separated.

### Example 4. Decomplexing test of solution CX3

The procedures are similar to those of Example 2, except that the starting material solution CX3 was used (the phosphorus-to-iron ratio was 6:1).

**Table 4. Test results of Example 4**

| Example | Actual phosphorus-to-i ron ratio | Ratio to water added, X (Vₛₒₗᵤₜᵢₒₙ:V_{water}) | Concentration of Fe after dilution mol/L | Reaction temperature Y (°C) | Reaction time (h) | Yield |
|---|---|---|---|---|---|---|
| Ex41 | 6:1 | 1:0 | 2 | 90 | 6 | No products |
| Ex42 | 6:1 | 1:1 | 1 | 90 | 6 | 3.20% |
| Ex43 | 6:1 | 1:2 | 0.667 | 90 | 6 | 16.30% |
| Ex44 | 6:1 | 1:3 | 0.5 | 90 | 6 | 46.90% |
| Ex45 | 6:1 | 1:4 | 0.4 | 90 | 6 | 75.30% |
| Ex46 | 6:1 | 1:5 | 0.33 | 90 | 6 | 86.20% |

The results in Table 4 show that: in a phosphorus-to-iron ratio of 6:1, no ferric phosphate dihydrate precipitate was observed with no water added. The addition of water (1-5 times in volume) caused the precipitation of ferric phosphate dihydrate. However, it is apparent that an increase in the phosphorus-to-iron ratio resulted in a decrease in the yield of the decomplexation reaction as compared to the data of Examples 2 and 3.

### Example 5. Decomplexing test of solution CX4

The procedures are similar to those of Example 2, except that the starting material solution CX4 was used (the phosphorus-to-iron ratio was 8:1).

**Table 5. Test results of Example 5**

| Example | Actual phosphorus-to-i ron ratio | Ratio to water added, X (V solution: V water) | Concentration of Fe after dilution mol/L | Reaction temperature Y (°C) | Reaction time (h) | Yield |
|---|---|---|---|---|---|---|
| Ex51 | 8:1 | 1:0 | 2 | 90 | 6 | 0% |
| Ex52 | 8:1 | 1:1 | 1 | 90 | 6 | 0% |
| Ex53 | 8:1 | 1:2 | 0.667 | 90 | 6 | 0% |
| Ex54 | 8:1 | 1:3 | 0.5 | 90 | 6 | 2.1% |
| Ex55 | 8:1 | 1:4 | 0.4 | 90 | 6 | 13.85% |
| Ex56 | 8:1 | 1:8 | 0.33 | 90 | 6 | 72.38% |

The results in Table 5 show that: similarly, in a phosphorus-to-iron ratio of 8:1, no ferric phosphate dihydrate precipitate was observed with no water added. The addition of water (3-8 times in volume) caused the precipitation of ferric phosphate dihydrate. Still similarly, an increase in the phosphorus-to-iron ratio resulted in a decrease in the yield of the decomplexation reaction.

### Example 6. Tests in extra groups

Referring to the procedures in Example 2, the reaction yield at different temperatures with different amounts of water was measured using different phosphorus-to-iron ratios, reaction temperatures, and water addition amounts.

**Table 6. Test results of Example 6**

| Example | Actual phosphorus-to-i ron ratio | Ratio to water added, X (Vₛₒₗᵤₜᵢₒₙ:V_{water}) | Concentration of Fe after dilution mol/L | Reaction temperature Y (°C) | Reaction time (h) | Yield |
|---|---|---|---|---|---|---|
| EX61 | 5.31:1 | 1:0.5 | 1.13 | 120 | 6 | 62.70% |
| EX62 | 5.50:1 | 1:0.5 | 1.09 | 100 | 6 | 50.30% |
| EX63 | 5.32:1 | 1:1 | 0.846 | 120 | 6 | 79.60% |
| EX64 | 5.13:1 | 1:1 | 0.878 | 100 | 6 | 76.70% |
| EX65 | 5.21:1 | 1:1 | 0.863 | 90 | 6 | 73.20% |
| EX66 | 5.39: 1 | 1:1.5 | 0.668 | 90 | 6 | 78.80% |
| EX67 | 5.21:1 | 1:2 | 0.576 | 90 | 6 | 81.30% |
| EX68 | 5.31:1 | 1:4 | 0.339 | 90 | 6 | 82.10% |
| EX69 | 5.18:1 | 1:7 | 0.217 | 90 | 6 | 93.20% |

Table 6 shows that increasing the decomplexation temperature will facilitate the decomplexation reaction. The reaction yields of EX61 and EX63 were significantly higher than those of EX62 and EX64, which were at lower reaction temperatures, even though EX64 had a lower phosphorus-to-iron ratio than EX63. EX69 shows that the 7-fold amount of water resulted in an Fe³⁺ concentration of 0.217 mol/L but a yield of over 93%.

### Example 7. Pressurized decomplexation test

Procedures for pressurized decomplexation: taking the reaction temperature of 110 °C as an example, water was added in a 1:1 volume ratio to the complex solution, and the mixture was transferred into a pressure-resistant flask. The system was pressurized and reacted for half an hour, and heated to 110 °C. The pressure was controlled at 0.06 MPa (gauge pressure) for 20 min and raised to 0.09 MPa (gauge pressure). The system was held at the pressure and temperature for 4 h. The yields of different phosphorus-to-iron ratios and temperatures were determined, and the test results are shown in Table 7.

Procedures of pressurized comparative examples (DB1 and DB2): the procedures are as follows, and the test results are shown in Table 7.

Comparative test DB1: when the phosphorus-to-iron ratio was 5.23:1, 50 mL of the complex solution was added into a pressure-resistant flask with no water added. The system was heated to 110 °C. The reading of the pressure gauge gradually increased along with the temperature rise. At about 20 min after the temperature rise to 110 °C, the pressure was stabilized at 0.1 MPa, where no precipitate was observed in the system after 6 h of reaction. The yield was 0%. Comparative test DB2: when the phosphorus-to-iron ratio was 6:1, 50 mL of the complex solution was added into a pressure-resistant flask, with no water added. The system was heated to 110 °C. The reading of the pressure gauge gradually increased along with the temperature rise. When the temperature arrived at 110 °C, the reading of the pressure gauge was 0.04 MPa, and the pressure was stabilized at 0.08 MPa over time, where no precipitate was observed in the system after 6 h of reaction. The yield was 0%.

**Table 7. Pressurized test and comparative test results**

| Example | Actual phosphorus-to-iron ratio | Ratio to water added, X (V solution: V water) | Concentration of Fe after dilution mol/L | Reaction temperature Y (°C) | Pressure (gauge pressure), Mpa | Reaction time (h) | Yield |
|---|---|---|---|---|---|---|---|
| EX71 | 5.69 | 1:1 | 1.5812 | 100 | 0.06 | 4 | 81.74% |
| EX72 | 5.11 | 1:1 | 1.7622 | 110 | 0.09 | 4 | 85.79% |
| EX73 | 5.17 | 1:1 | 1.7424 | 120 | 0.13 | 4 | 92.64% |
| DB1 | 5.23:1 | 1:0 | 2 | 110 | 0.1 | 6 | 0 |
| DB2 | 6:1 | 1:0 | 2 | 110 | 0.08 | 6 | 0 |

The results in Table 7 show that the decomplexation reaction is significantly improved by pressurization, and the reaction speed and yield were significantly improved compared to the data in Table 6. The results of comparative examples DB1 and DB2 show that without water, pressure and heat cannot achieve ideal decomplexing effects in a proper period. To acquire significant results, further increases in pressure and reaction temperature are required.

### Example 8. Preparation of ferric phosphate

### 1. Preparation of complex solutions

310 mL of a phosphoric acid solution with a mass fraction of 85% was transferred into a 1-L flask, and 190 mL of deionized water was added to give a phosphoric acid solution at 9 mol/L. 79.84 g of ferric oxide powder was added to the phosphoric acid solution, and the system was heated to 90 °C and stirred at 90 °C for 3 h. After the completion of the reaction, the system was filtered to give a mauve ferric phosphate complex solution, wherein the phosphorus-to-iron ratio of the ferric phosphate complex solution was 4.5:1, and the ferric concentration was 2 mol/L.

### 2. Preparation of ferric phosphate product

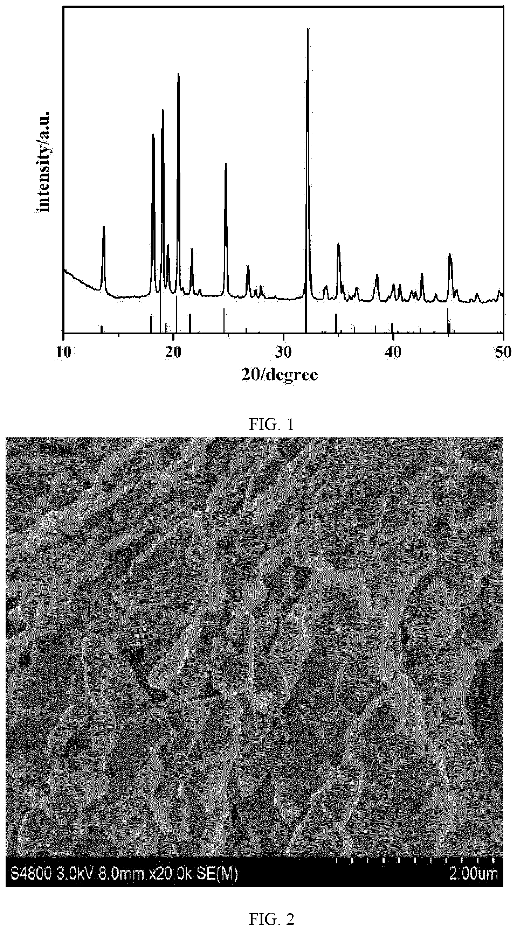

To 50 mL of the mauve ferric phosphate complex solution obtained in Step 1 (the phosphorus-to-iron ratio was 4.5:1) was added 2 times in volume of deionized water. The system of the deionized water and the ferric phosphate complex solution was heated to 90 °C. After 6 h of reaction, the precipitate was collected by filtering and washed to obtain the product ferric phosphate dihydrate, wherein the mass of the product was 17.01 g, and the yield was 90.9%. The powder was subjected to X-ray diffraction to give an XRD spectrogram as shown in FIG. 1. The white ferric phosphate dihydrate powder was transferred into a muffle furnace, roasted for 6 h at 600 °C, and cooled to give a pale yellow powder. The powder was then subjected to scanning electron microscopy (SEM) to give FIG. 2.

The embodiments of the present invention have been described above. However, the present invention is not limited thereto. Any modification, equivalent, improvement, and the like made without departing from the spirit and principle of the present invention shall fall within the protection scope of the present invention.

## Claims

1. A method for preparing ferric phosphate dihydrate by decomplexing a ferric phosphate complex, comprising:
adding, to a ferric phosphate complex solution, water of 0.3-30 times, preferably 0.3-8 times the volume of the complex solution,
reacting at temperature within a range from room temperature to 180 °C for 1 min to 20 h, preferably 10 min to 6 h, and
conducting solid-liquid separation to obtain solid ferric phosphate dihydrate.

2. The method according to claim 1, wherein the method is conducted at a temperature of 60 °C to 160 °C and the phosphorus-to-iron ratio of the ferric phosphate complex solution is (2.5-10):1.

3. The method according to claim 1 or 2, wherein the method is conducted at normal pressure or in a pressurized condition at 0.1 MPa to 1 MPa.

4. A method for preparing ferric phosphate dihydrate by decomplexing a ferric phosphate complex, comprising:
S1: controlling the phosphorus-to-iron ratio in the ferric phosphate complex solution at (2.5-10):1, preferably (3-6):1;
S2: adding water to dilute the ferric phosphate complex solution, controlling the content of Fe ion within the range of 0.1-2 mol/L, controlling the temperature of the complex solution to be within a range from room temperature to 180 °C, reacting for 1 min to 20 h, and conducting solid-liquid separation to obtain ferric phosphate dihydrate precipitate.

5. The method according to claim 4, wherein in S2, the content of Fe ion is controlled at 0.2-2 mol/L, and the heating temperature is controlled at 60 °C to 160 °C.

6. The method according to claim 4 or 5, wherein S2 is conducted at a pressure of 0.1-1 MPa.

7. The method according to any one of claims 4-6, further comprising: S3, optionally, returning a second mother liquor, obtained by the solid-liquid separation, to S1 for controlling the phosphorus-to-iron ratio.

8. A method of preparing ferric phosphate, comprising:
S0: reacting a 35-85% phosphoric acid with ferric oxide at temperature within a range from room temperature to 180 °C, filtering to remove insoluble substances after the reaction, and collecting a first mother liquor;
S1: detecting and adjusting the phosphorus-to-iron ratio in the first mother liquor ferric phosphate complex solution to (2.5-10):1; and
S2: controlling the temperature of the first mother liquor to be within a range from room temperature to 180 °C, adding water into the first mother liquor, controlling the concentration of Fe ion at 0.1 mol/L and 2 mol/L, reacting for 1 min to 20 h, and conducting solid-liquid separation to obtain a solid ferric phosphate dihydrate and a second mother liquor.

9. The method according to claim 8, wherein S0 is conducted at 60 °C to 140 °C and the concentration of phosphoric acid is 50% to 85%; preferably, S2 is conducted at 60 °C to 160 °C, and the reaction time is 10 min to 6 h; optionally, S2 can be conducted in a pressurized condition, the pressure being controlled at an absolute pressure of 0.1 to 1 MPa, preferably 0.1 to 0.5 MPa.

10. The method according to claim 8 or 9, further comprising:
S3: returning the second mother liquor obtained by the solid-liquid separation to S0, mixing with concentrated phosphoric acid to adjust the concentration of phosphoric acid, or returning to S1 for adjusting the phosphorus-to-iron ratio;
and/or, S4: roasting ferric phosphate dihydrate to give ferric phosphate.
